**Europäisches Patentamt**

**European Patent Office**

**Office européen des brevets**

(19)

(11) Veröffentlichungsnummer: **0 226 653**
**B1**

(12) # EUROPÄISCHE PATENTSCHRIFT

(45) Veröffentlichungstag der Patentschrift:
**22.02.89**

(51) Int. Cl.⁴: **G01C 17/38**

(21) Anmeldenummer: **85116345.1**

(22) Anmeldetag: **20.12.85**

(54) **Verfahren zur Kurswinkelbestimmung mittels und zur automatischen Kalibration eines in einem Luftfahrzeug fest montierten Dreiachsen-Magnetometers.**

(43) Veröffentlichungstag der Anmeldung:
**01.07.87 Patentblatt 87/27**

(45) Bekanntmachung des Hinweises auf die Patenterteilung:
**22.02.89 Patentblatt 89/8**

(84) Benannte Vertragsstaaten:
**CH DE FR GB IT LI**

(56) Entgegenhaltungen:
**GB-A- 2 128 749**
**US-A- 4 347 730**

(73) Patentinhaber: **LITEF GmbH, Lörracher Strasse 18, D-7800 Freiburg/Br.(DE)**

(72) Erfinder: **Bäumker, Manfred, Dr., Berner Strasse 21, D-7800 Freiburg(DE)**

(74) Vertreter: **Patentanwälte TER MEER - MÜLLER - STEINMEISTER, Mauerkircherstrasse 45, D-8000 München 80(DE)**

**Beschreibung**

Die Erfindung betrifft ein Verfahren zur Kurswinkelbestimmung gemäß dem Oberbegriff der Ansprüche 1 und 2 mittels eines in einem Luftfahrzeug fest montierten, aufgrund von magnetischen Störfeldern im Fahrzeug und instrumentell bedingten Fehlern zu kalibrierenden Dreiachsen-Magnetometers.

Das Dreiachsen-Magnetometer nutzt die Eigenschaften des Erdmagnetfeldes, dessen Feldlinien zum magnetischen Nordpol ausgerichtet sind, zur Kursbestimmung. Die eigentliche Aufgabe bei der Kursbestimmung besteht aus der Bestimmung der Fahrzeuglängsachse. Die Horizontalintensität H ergibt sich aus der Totalintensität T und der Inklination I (Neigung der Feldlinien in bezug auf die Horizontalebene):

$H = T \cdot \cos I$   (1-1)

Entsprechend ist die Vertikalintensität V als

$V = T \cdot \sin I$   (1-2)

definiert. Die Maßeinheit des Magnetfelds ist [A/m] bzw. [Oe] (Oerstedt 1, Oe = 79,58 A/m; 1 A/m = 0,01257 Oe). Die Totalintensität des Erdmagnetfelds variiert von 15 bis 60 A/m, und die Inklination erreicht Werte zwischen 0° (Äquatornähe) und 90° (magnetischer Nord- und Südpol). In Mitteleuropa beträgt die Totalintensität ca. 40 A/m und die Inklination ca. 65°. Für Navigationszwecke wird weiterhin die Differenz zwischen der geographischen und der magnetischen Nordrichtung benötigt. Diese Differenz, die als Deklination (magnetische Variation) δ bezeichnet wird, ist wie die Totalintensität und die Inklination ortsabhängig und erreicht in der Nähe der Pole große Beträge (bis ±180°). Sie ist definiert als

$\delta = \psi - \psi_m$   (1-3)

$\psi$: Kurswinkel rechtweisend (geographisch Nord)
$\psi_m$: Kurswinkel mißweisend (magnetisch Nord).

In Mitteleuropa variiert die Deklination von −10° bis +10°.

Das Erdmagnetfeld ist zeitlich nicht konstant, sondern unterliegt langperiodischen (säkularen) und kurzperiodischen Änderungen. Kurzperiodische Änderungen werden z.B. durch atmosphärische Störungen (Magnetstürme, Gewitter, Nordlichter) hervorgerufen. Langperiodische Störungen werden durch Veränderungen im flüssigen Erdkern (Konvektionsströme) verursacht und betragen durchschnittlich für Mitteleuropa:

$$\frac{dT}{dt} \approx 0,04 \; \frac{A}{m}/\text{Jahr}$$

$$\frac{dI}{dt} \approx 0,04°/\text{Jahr}$$

$$\frac{d\delta}{dt} \approx 0,15°/\text{Jahr}$$

Störend auf die magnetische Kursbestimmung wirken sich ferner lokale Anomalien des Erdmagnetfeldes (z.B. Erzlagerstätten) aus.

Die Grundlage für die Erfindung bildet das nachfolgend beschriebene Meßprinzip:

Ein auf eine wechselstromdurchflossene Spule mit Eisenkern wirkendes äußeres Magnetfeld erzeugt eine induzierte Spannung, die direkt proportional zum einwirkenden Magnetfeld ist. Durch Multiplikation der meßbaren induzierten Spannung mit einer Proportionalitätskonstanten erhält man die Stärke (Intensität) des äußeren Magnetfelds.

Werden drei solche Spulen rechtwinklig zueinander angeordnet, wobei die erste Meßachse parallel zur Flugzeuglängsachse (positiv in Flugrichtung), die zweite Meßachse parallel zur Querachse (positiv nach rechts) und die dritte Achse parallel zur Hochachse (positiv nach unten) installiert wird, so messen die Sensoren die Komponenten $T_x$, $T_y$ und $T_z$ des Erdmagnetfelds. Sind die Lagewinkel des Flugzeugs ($\Phi$ = Rollwinkel, $\Theta$ = Nickwinkel) bekannt, so lassen sich die Meßgrößen in die horizontalen Komponenten $H_x$ und $H_y$ und in die Vertikalkomponente V zerlegen:

$$\begin{Bmatrix} H_x \\ H_y \\ V \end{Bmatrix} = \underline{C}_B^H \begin{Bmatrix} T_x \\ T_y \\ T_z \end{Bmatrix} \qquad (2-1)$$

mit

$$\underline{C}_B^H = \begin{Bmatrix} \cos\Theta & \sin\Theta\cdot\sin\Phi & \sin\Theta\cdot\cos\Phi \\ 0 & \cos\Phi & -\sin\Phi \\ -\sin\Theta & \cos\Theta\,\sin\Phi & \cos\Theta\,\cos\Phi \end{Bmatrix} \qquad (2\text{--}2)$$

Aus den Horizontalkomponenten $H_x$ und $H_y$ leitet sich der Kurswinkel $\psi_m$ wie folgt ab:

$$\psi_m = \arctan\frac{-H_y}{H_x} \qquad (2\text{--}3)$$

Zusätzlich läßt sich auch der Inklinationswinkel berechnen (hier nicht weiter von Interesse):

$$I = \arctan\frac{V}{\sqrt{H_x^2 + H_y^2}} \qquad (2\text{--}4)$$

Folgende Fehlerquellen, die durch eine Kalibration auszuschalten sind, beeinflussen die Genauigkeit des durch ein an einem Fahrzeug montiertes Dreiachsen-Magnetometer gewonnenen Kurses:
– magnetische Störfelder (Harteisen, Weicheisen)
– instrumentell bedingte Fehler (Skalenfaktorfehler, Bias, Achsausrichtfehler).

Magnetische Störfelder werden durch magnetische und paramagnetische Materialien in der näheren Umgebung der Magnetsonde erzeugt. Dabei unterscheidet man ein konstantes Störfeld $T_{S1}$ (verursacht durch Harteisenteile) und ein richtungsabhängiges Störfeld $T_{S2}$ (verursacht durch Weicheisenteile). Zu den instrumentell bedingten Fehlern gehören bei einem Dreiachsen-Magnetometer die Nullpunktfehler (Bias $b_x$, $b_y$, $b_z$), die Skalenfaktorfehler ($k_x$, $k_y$, $k_z$) sowie die Achsausrichtfehler ($w_x$, $w_y$, $w_z$).

Anstelle der Sollwerte $T_x$, $T_y$, $T_z$ ergeben sich dann die folgenden fehlerbehafteten Größen $T'_x$, $T'_y$, $T'_z$:

$$\begin{Bmatrix} T'_x \\ T'_y \\ T'_z \end{Bmatrix} = \left\{ \underline{C}_n^b\cdot\begin{Bmatrix} H \\ O \\ V \end{Bmatrix} + \underline{T}_{S_1} + \underline{T}_{S_2} \right\}\cdot\begin{Bmatrix} 1+k_x & w_z & -w_y \\ -w_z & 1+k_y & w_x \\ w_y & -w_x & 1+k_z \end{Bmatrix} + \begin{Bmatrix} b_x \\ b_y \\ b_z \end{Bmatrix} \qquad (3\text{--}1)$$

H: Horizontalintensität des örtlichen Magnetfeldes
V: Vertikalintensität des örtlichen Magnetfeldes
mit

$$\underline{C}_n^b = \left\{ \underline{C}_H^n \cdot \underline{C}_B^H \right\}T \qquad (3\text{--}2)$$

$$\underline{C}_H^n = \begin{Bmatrix} \cos\psi & -\sin\psi & 0 \\ \sin\psi & \cos\psi & 0 \\ 0 & 0 & 1 \end{Bmatrix} \qquad (3\text{--}3)$$

$$\underline{T}_{S_1} = T_{S_1}\cdot\begin{Bmatrix} \cos\beta_1 \cdot \cos\alpha_1 \\ \cos\beta_1 \cdot \sin\alpha_1 \\ -\sin\beta_1 \end{Bmatrix} \qquad (3\text{--}4)$$

$$\underline{T}_{S_2} = T_{S_2}\cdot\cos(\psi-\psi_o)\cdot\cos(\Phi-\Phi_o)\cdot\cos(\Theta-\Theta_o)\begin{Bmatrix} \cos\beta_2\cdot\cos\alpha_2 \\ \cos\beta_2\cdot\sin\alpha_2 \\ -\sin\beta_2 \end{Bmatrix} \quad (3\text{--}5$$

EP 0 226 653 B1

$\alpha_1$, $\beta_1$: Richtung des Störfelds $T_{S_1}$

$\alpha_2$, $\beta_2$: Richtung des Störfelds $T_{S_2}$

$\psi_0$, $\Phi_0$, $\Theta_0$: Richtung, in der das Störfeld $T_{S_2}$ maximal wirkt.

Eine vollständige Kalibration erfordert die Bestimmung von 18 Unbekannten ($T_{S_1}$, $T_{S_2}$, $\alpha_1$, $\alpha_2$, $\beta_1$, $\beta_2$, $\psi_0$, $\Phi_0$, $\Theta_0$, $k_x$, $k_y$, $k_z$, $w_x$, $w_y$, $w_z$, $b_x$, $b_y$, $b_z$), wobei die Intensitäten am Kalibrationsort H und V als bekannt vorausgesetzt werden.

Dies führt zu einem komplizierten Gleichungssystem, das schlecht konditioniert ist und überhaupt erst nach Durchführung bestimmter (extremer) Flugmanöver lösbar ist.

Wegen der hohen Komplexität des zu lösenden Gleichungssystems erfolgt die Kalibration eines Dreiachsen-Magnetometers gewöhnlich auf einer Dreh-(Kompensier-)scheibe, auf der verschiedene Referenzrichtungen festgelegt werden oder mit Hilfe eines Theodoliten mit integrierter Bussole. Bei dieser sehr aufwendigen Methode werden an verschiedenen Kreisstellen die Differenzen zwischen Magnetkurs und Referenzrichtung optisch-mechanisch mittels am Flugzeug angebrachter Referenzpunkte ermittelt und anschließend elektrisch oder über ein Programm, also softwaremäßig, kompensiert. Eine solche Kalibration muß nicht nur bei Austausch des Dreiachsen-Magnetometers, sondern auch bei Austausch oder Veränderung von magnetisch wirksamen Flugzeugteilen, beispielsweise in einem Hubschrauber, insbesondere auch bei Änderung eines Beladeprogramms, neu erfolgen.

Aus der Druckschrift GB-A 2 128 749, von der ausgehend der Oberbegriff der vorliegenden Ansprüche 1 und 2 gebildet worden ist, ist eine Kalibrationsmethode bekannt, bei der davon ausgegangen wird, daß nur Hart- und Weicheisenteile im Fahrzeug (Flugzeug) den Magnetkurs verfälschen. In diesem Fall ergibt sich als Kalibrationsfunktion speziell ein Ellipsoid, wobei für drei Magnetometersignale ein gekoppeltes Gleichungssystem mit neun Unbekannten zu lösen ist. Mit einem solchen Verfahren läßt sich ein Magnetometer aber nur "relativ", nicht aber "absolut" kalibrieren, d.h. Einbau- und Instrumentenfehler werden nicht erfaßt. Außerdem müssen zunächst sämtliche neun für die Kalibration erforderlichen Messungen (oder auch mehr) abgespeichert werden, da das Gleichungssystem bei zu dicht beieinanderliegenden Meßpunkten sehr leicht singulär oder schwach konditioniert sein kann.

Bei einem aus der Druckschrift US-A 4 347 730 bekannten Kursreferenzsystem erfolgt die Kalibration eines Flux Valves mittels einer bekannten Kalibrationsfunktion für den Kurswinkel $\psi$. Der Pilot muß bei der im Flug möglichen Kalibration für eine gewisse Zeit einen konstanten Kurs einhalten. Während dieser Zeit wird, ausgehend von einer Anfangsreferenzrichtung, der von einem kurzzeitstabilen Kurskreisel ermittelte Kurs mit dem vom Flux Valve ermittelten Kurs verglichen und es wird der für eine Kalibrierung notwendige Sollwert des Erdmagnetfelds festgelegt. Dieser Vergleich wird an mehreren Kreisstellen (Kurswinkel) wiederholt. Kompensationswerte werden sukzessiv und rekursiv in einer Recheneinheit bis zu einer vorgegebenen Genauigkeit berechnet. Hierbei werden jedoch nur die Koeffizienten A, B, C, D und eventuell die Drift des Kreiselkompasses bzw. Terme höherer Ordnung erfaßt. Unklar bleibt vor allem, wie ein konstanter sogenannter Indexfehler I bestimmt wird. Bei einem Dreiachsen-Magnetometer zeigt sich in erster Näherung zwar eine ähnliche Kalibrationsfunktion, jedoch können Instrumenten- und Einbaufehler mit der in dieser Druckschrift beschriebenen Maßnahme, insbesondere bei drei Meßachsen, nicht berücksichtigt werden.

Der Erfindung liegt die Aufgabe zugrunde, ein Verfahren zur Kurswinkelbestimmung und zur automatischen Kalibration der Kursgenauigkeit entsprechend der eingangs genannten Art für Luftfahrzeuge bereitzustellen, die mit Dreiachsen-Magnetometern ausgerüstet sind, das sich jedoch wesentlich einfacher, rasch und zuverlässig durchführen läßt, ohne daß eine Kompensation auf einem Drehtisch und/oder ein sehr hoher Rechenaufwand und/oder extreme Flugmanöver erforderlich sind.

Die Patentansprüche 1 und 2 geben zwei alternative verfahrensmäßige Lösungen gemäß der Erfindung an, wobei im ersten Fall (Patentanspruch 1) die Ausgangsreferenz genau bekannt ist, während bei der alternativen Verfahrensführung gemäß Patentanspruch 2 die Anfangsreferenzrichtung mehr oder weniger grob geschätzt wird.

Als Ausgangspunkt für die Erfindung wurde zunächst aufgrund von Flugversuchen festgestellt, daß bei reinen Navigationsflügen etwa mittels Hubschraubern die Beträge der Nick- bzw. Rollwinkel selten Werte von 7,5° bzw. 15° erreichen. Selbst bei einem hochdynamischen Geländefolgeflug werden nur kuzzeitig die Maximalbeträge von 25° beim Nick- bzw. 35° beim Rollwinkel erreicht.

Geht man von der Voraussetzung aus, daß im Einsatz nur Roll- und Nickwinkel kleiner als 50° vorkommen, so zeigt sich als Grundlage für die Erfindung, daß überraschenderweise ein vereinfachtes Kalibrationsmodell angewendet werden kann, das die oben erwähnten Fehler weitestgehend kompensiert. Wird im Einsatz dennoch der Betrag von 50° beim Roll- bzw. Nickwinkel überschritten, so wird für diese Zeitdauer sinnvollerweise die Magnetstützung abgeschaltet, was sich instrumentell relativ leicht erreichen läßt.

Das erfindungsgemäß angewendete vereinfachte Kalibrationsmodell enthält 3 × 7 Kalibrationskoeffizienten und ist nachfolgend aufgeführt:

$$\Delta T_x = T_x' - T_x = A_x + B_x \cdot \sin\psi + C_x \cdot \cos\psi + \qquad (3\text{-}6a)$$

$$D_x \cdot \Phi + E_x \cdot \Phi^2 + F_x \cdot \Theta + G_x \cdot \Theta^2$$

$$\Delta T_y = T_y' - T_y = A_y + B_y \cdot \sin\psi + C_y \cdot \cos\psi + \qquad (3\text{-}6b)$$

$$D_y \cdot \Phi + E_y \cdot \Phi^2 + F_y \cdot \Theta + G_y \cdot \Theta^2$$

$$\Delta T_z = T_z' - T_z = A_z + B_z \cdot \sin\psi + C_z \cdot \cos\psi + \qquad (3\text{-}6c)$$

$$D_z \cdot \Phi + E_z \cdot \Phi^2 + F_z \cdot \Theta + G_z \cdot \Theta^2$$

mit den Sollwerten $T_x$, $T_y$, $T_z$

$$\begin{Bmatrix} T_x \\ T_y \\ T_z \end{Bmatrix} = \underline{C}_n^b \cdot \begin{Bmatrix} H \\ O \\ V \end{Bmatrix} \qquad (3\text{-}7)$$

Der scheinbare Nachteil, daß nach (3-6) insgesamt 21 Kalibrationskoeffizienten anstelle der zuvor aufgeführten 18 Koeffizienten zu bestimmen sind, stellt sich bei eingehender Betrachtung als besonderer Vorteil der Erfindung heraus, da die Bestimmungsgleichungen für $A_x$, $B_x$, ..., $G_x$ identisch mit denen für $A_y$, $B_y$, ..., $G_y$ bzw. mit denen für $A_z$, $B_z$, ... $G_z$ und voneinander völlig entkoppelt sind, so daß letztlich nur noch ein Gleichungssystem mit sieben Unbekannten zu lösen ist.

Die Kalibrationskoeffizienten $A_x$, $B_x$, ..., $G_x$; $A_y$, $B_y$, ..., $G_y$ und $A_z$, $B_z$, ... $G_z$ in den Gleichungen (3-6a), (3-6b) und (3-6c) sind die Unbekannten der Kalibrationsfunktionen $\Delta T_x$, $\Delta T_y$, $\Delta T_z$, die die wichtigsten Fehlerquellen eines Dreiachsen-Magnetometers bestmöglich nach der Methode der kleinsten Quadrate approximieren. Die Berechnungsformeln basieren auf den Formeln des diskreten Kalmanfilters, das besonders für die rekursive Berechnung geeignet ist. Für eine automatische Kalibration empfiehlt sich ein rekursiver Algorithmus, der sukzessiv nach jeder neuen Beobachtung (Beobachtungstripel $\Delta T_x$, $\Delta T_y$, $\Delta T_z$) aus den vorhergehenden Koeffizienten neue Koeffizienten berechnet. Aus numerischen Gründen ist es zweckmäßig, zunächst die Kalibrationsformel (3-6) mit einem Näherungswert für die Totalintensität $T_0$ zu skalieren:

$$l_x = \frac{T'_x - T_x}{T_0} = A'_x + B'_x \cdot \sin\psi + C'_x \cdot \cos\psi + D'_x \cdot \phi + E'_x \phi^2 + F'_x \cdot \Theta + G'_x \cdot \Theta^2 \tag{3-8a}$$

$$l_y = \frac{T'_y - T_y}{T_0} = A'_y + B'_y \cdot \sin\psi + C'_y \cdot \cos\psi + D'_y \cdot \phi + E'_y \phi^2 + F'_y \cdot \Theta + G'_y \cdot \Theta^2 \tag{3-8b}$$

$$l_z = \frac{T'_z - T_z}{T_0} = A'_z + B'_z \cdot \sin\psi + C'_z \cdot \cos\psi + D'_z \cdot \phi + E'_z \phi^2 + F'_z \cdot \Theta + G'_z \cdot \Theta^2 \tag{3-8c}$$

mit

$$A'_x = \frac{A_x}{T_0}, \qquad B'_x = \frac{B_x}{T_0},$$

$$C'_x = \frac{C_x}{T_0}, \qquad D'_x = \frac{D_x}{T_0}, \tag{3-9a,b,c,d,e,f}$$

$$E'_x = \frac{E_x}{T_0}, \qquad F'_x = \frac{F_x}{T_0}, \qquad G'_x = \frac{G_x}{T_0}.$$

Entsprechend sind die Koeffizienten A'y, B'y, ..., G'y und A'z, B'z, ..., G'z festgelegt.

Für den rekursiven Algorithmus müssen zunächst folgende Startwerte festgelegt werden:

$$A'_{x_0} = B'_{x_0} = C'_{x_0} = D'_{x_0} = E'_{x_0} = F'_{x_0} = G'_{x_0} = 0 \qquad (3\text{-}10a)$$

$$A'_{y_0} = B'_{y_0} = C'_{y_0} = D'_{y_0} = E'_{y_0} = F'_{y_0} = G'_{y_0} = 0 \qquad (3\text{-}10b)$$

$$A'_{z_0} = B'_{z_0} = C'_{z_0} = D'_{z_0} = E'_{z_0} = F'_{z_0} = G'_{z_0} = 0 \qquad (3\text{-}10c)$$

$$q_{11_0} = q_{22_0} = q_{33_0} = q_{44_0} = q_{55_0} =$$

$$q_{66_0} = q_{77_0} = 100 \qquad (3\text{-}11a)$$

$$q_{12_0} = q_{13_0} = q_{14_0} = q_{15_0} = q_{16_0} = q_{17_0} = q_{23_0} =$$

$$q_{24_0} = q_{25_0} = q_{26_0} = q_{27_0} = q_{34_0} = q_{35_0} =$$

$$q_{36_0} = q_{37_0} = q_{45_0} = q_{46_0} = q_{47_0} = q_{56_0} =$$

$$q_{67_0} = 0 \qquad (3\text{-}11b)$$

$$\sigma_1 = \frac{\sigma}{T_0} \qquad (3\text{-}12)$$

($\sigma$: Standardabweichung eines Magnetfeldsensors)
z.B.

$$\sigma_1 = \frac{0{,}04 \ A/m}{40 \ A/m} = 1 \cdot 10^{-3}$$

und z.B.

$\sigma_p = 1 \cdot 10^{-3}$ (Rauschparameter) (3-13)

In den Gleichungen (3-11a) und (3-11b) bezeichnen die Variablen $q_{11_0}$, ..., $q_{77_0}$ bzw. $q_{12_0}$, ..., $q_{67_0}$ die Startwerte für die Varianzen bzw. Kovarianzen (Korrelationen) der zu bestimmenden Kalibrationskoeffizienten und dienen im Verlauf der sukzessiven Berechnung als Genauigkeitskriterium für die Güte der Kalibration.

Mit jedem neuen Beobachtungstripel $\ell_{xk}$, $\ell_{yk}$, $\ell_{zk}$ (vgl. (3-8), k bezeichnet die laufende Nummer) erhält man mit den nachfolgend aufgeführten Formeln jeweils verbesserte Werte für die unbekannten Kalibrationskoeffizienten:

$$-D'_{X_{k-1}} \cdot \Phi_k - E'_{X_{k-1}} \cdot \Phi_k^2 - F'_{X_{k-1}} \cdot \Theta_k - G'_{X_{k-1}} \cdot \Theta_k^2 \qquad (3\text{-}14a)$$

$$\ell'_{Y_k} = \ell_{Y_k} - A'_{Y_{k-1}} - B'_{Y_{k-1}} \cdot \sin\psi_k - C'_{Y_{k-1}} \cdot \cos\psi_k$$

$$-D'_{Y_{k-1}} \cdot \Phi_k - E'_{Y_{k-1}} \cdot \Phi_k^2 - F'_{Y_{k-1}} \cdot \Theta_k - G'_{Y_{k-1}} \cdot \Theta_k^2 \qquad (3\text{-}14b)$$

$$\ell'_{Z_k} = \ell_{Z_k} - A'_{Z_{k-1}} - B'_{Z_{k-1}} \cdot \sin\psi_k - C'_{Z_{k-1}} \cdot \cos\psi_k$$

$$-D'_{Z_{k-1}} \cdot \Phi_k - E'_{Z_{k-1}} \cdot \Phi_k^2 - F'_{Z_{k-1}} \cdot \Theta_k - G'_{Z_{k-1}} \cdot \Theta_k^2 \qquad (3\text{-}14c)$$

$$\begin{bmatrix} a_1 \\ a_2 \\ a_3 \\ a_4 \\ a_5 \\ a_6 \\ a_7 \end{bmatrix} = \begin{bmatrix} q_{11} & q_{12} & q_{13} & q_{14} & q_{15} & q_{16} & q_{17} \\ q_{12} & q_{22} & q_{23} & q_{24} & q_{25} & q_{26} & q_{27} \\ q_{13} & q_{23} & q_{33} & q_{34} & q_{35} & q_{36} & q_{37} \\ q_{14} & q_{24} & q_{34} & q_{44} & q_{45} & q_{46} & q_{47} \\ q_{15} & q_{25} & q_{35} & q_{45} & q_{55} & q_{56} & q_{57} \\ q_{16} & q_{26} & q_{36} & q_{46} & q_{56} & q_{66} & q_{67} \\ q_{17} & q_{27} & q_{37} & q_{47} & q_{57} & q_{67} & q_{77} \end{bmatrix}_{k-\ell} \cdot \begin{bmatrix} 1 \\ \sin\psi_k \\ \cos\psi_k \\ \Phi_k \\ \Phi_k^2 \\ \Theta_k \\ \Theta_k^2 \end{bmatrix} \qquad (3\text{-}15)$$

$$d = a_1 + a_2 \cdot \sin\psi_k + a_3 \cdot \cos\psi_k + a_4 \cdot \phi_k + a_5 \cdot \phi_k^2$$

$$+ a_6 \cdot \Theta_k + a_7 \cdot \Theta_k^2 + \sigma_\ell^2 \qquad (3\text{-}16)$$

$$g_1 = \frac{a_1}{d} \tag{3-17a}$$

$$g_2 = \frac{a_2}{d} \tag{3-17b}$$

$$g_3 = \frac{a_3}{d} \tag{3-17c}$$

$$g_4 = \frac{a_4}{d} \tag{3-17d}$$

$$g_5 = \frac{a_5}{d} \tag{3-17e}$$

$$g_6 = \frac{a_6}{d} \tag{3-17f}$$

$$g_7 = \frac{a_7}{d} \tag{3-17g}$$

$$A'_{X_k} = A'_{X_{k-1}} + g_1 \cdot \ell'_{X_k} \tag{3-18a}$$

$$B'_{X_k} = B'_{X_{k-1}} + g_2 \cdot \ell'_{X_k} \tag{3-18b}$$

$$C'_{X_k} = C'_{X_{k-1}} + g_3 \cdot \ell'_{X_k} \tag{3-18c}$$

$$D'_{X_k} = D'_{X_{k-1}} + g_4 \cdot \ell'_{X_k} \tag{3-18d}$$

$$E'_{X_k} = E'_{X_{k-1}} + g_5 \cdot \ell'_{X_k} \tag{3-18e}$$

$$F'_{X_k} = F'_{X_{k-1}} + g_6 \cdot \ell'_{X_k} \tag{3-18f}$$

$$G'_{X_k} = G'_{X_{k-1}} + g_7 \cdot \ell'_{X_k} \tag{3-18g}$$

$$A'_{Y_k} = A'_{Y_{k-1}} + g_1 \cdot \ell'_{Y_k} \tag{3-19a}$$

$$B'_{Y_k} = B'_{Y_{k-1}} + g_2 \cdot \ell'_{Y_k} \tag{3-19b}$$

9

$$C'_{Y_k} = C'_{Y_{k-1}} + g_3 \cdot \ell'_{Y_k} \qquad (3-19c)$$

$$D'_{Y_k} = D'_{Y_{k-1}} + g_4 \cdot \ell'_{Y_k} \qquad (3-19d)$$

$$E'_{Y_k} = E'_{Y_{k-1}} + g_5 \cdot \ell'_{Y_k} \qquad (3-19e)$$

$$F'_{Y_k} = F'_{Y_{k-1}} + g_6 \cdot \ell'_{Y_k} \qquad (3-19f)$$

$$G'_{Y_k} = G'_{Y_{k-1}} + g_7 \cdot \ell'_{Y_k} \qquad (3-19g)$$

$$A'_{Z_k} = A'_{Z_{k-1}} + g_1 \cdot \ell'_{Z_k} \qquad (3-20a)$$

$$B'_{Z_k} = B'_{Z_{k-1}} + g_2 \cdot \ell'_{Z_k} \qquad (3-20b)$$

$$C'_{Z_k} = C'_{Z_{k-1}} + g_3 \cdot \ell'_{Z_k} \qquad (3-20c)$$

$$D'_{Z_k} = D'_{Z_{k-1}} + g_4 \cdot \ell'_{Z_k} \qquad (3-20d)$$

$$E'_{Z_k} = E'_{Z_{k-1}} + g_5 \cdot \ell'_{Z_k} \qquad (3-20e)$$

$$F'_{Z_k} = F'_{Z_{k-1}} + g_6 \cdot \ell'_{Z_k} \qquad (3-20f)$$

$$G'_{Z_k} = G'_{Z_{k-1}} + g_7 \cdot \ell'_{Z_k} \qquad (3-20g)$$

$$q_{11_k} = q_{11_{k-1}} - a_1 \cdot g_1 + \sigma_p^2 \qquad (3-21a)$$

$$q_{12_k} = q_{12_{k-1}} - a_2 \cdot g_1 \qquad (3-21b)$$

$$q_{13_k} = q_{13_{k-1}} - a_3 \cdot g_1 \qquad (3-21c)$$

$$q_{14_k} = q_{14_{k-1}} - a_4 \cdot g_1 \qquad (3-21d)$$

$$q_{15_k} = q_{15_{k-1}} - a_5 \cdot g_1 \qquad\qquad (3-21e)$$

$$q_{16_k} = q_{16_{k-1}} - a_6 \cdot g_1 \qquad\qquad (3-21f)$$

$$q_{17_k} = q_{17_{k-1}} - a_7 \cdot g_1 \qquad\qquad (3-21g)$$

$$q_{22_k} = q_{22_{k-1}} - a_2 \cdot g_2 + \sigma_p^2 \qquad\qquad (3-21h)$$

$$q_{23_k} = q_{23_{k-1}} - a_3 \cdot g_2 \qquad\qquad (3-21i)$$

$$q_{24_k} = q_{24_{k-1}} - a_4 \cdot g_2 \qquad\qquad (3-21j)$$

$$q_{25_k} = q_{25_{k-1}} - a_5 \cdot g_2 \qquad\qquad (3-21k)$$

$$q_{26_k} = q_{26_{k-1}} - a_6 \cdot g_2 \qquad\qquad (3-21\ell)$$

$$q_{27_k} = q_{27_{k-1}} - a_7 \cdot g_2 \qquad\qquad (3-21m)$$

$$q_{33_k} = q_{33_{k-1}} - a_3 \cdot g_3 + \sigma_p^2 \qquad\qquad (3-21n)$$

$$q_{34_k} = q_{34_{k-1}} - a_4 \cdot g_3 \qquad\qquad (3-21o)$$

$$q_{35_k} = q_{35_{k-1}} - a_5 \cdot g_3 \qquad\qquad (3-21p)$$

$$q_{36_k} = q_{36_{k-1}} - a_6 \cdot g_3 \qquad\qquad (3-21q)$$

$$q_{37_k} = q_{37_{k-1}} - a_7 \cdot g_3 \qquad\qquad (3-21r)$$

$$q_{44_k} = q_{44_{k-1}} - a_4 \cdot g_4 + \sigma_p^2 \qquad\qquad (3-21s)$$

$$q_{45_k} = q_{45_{k-1}} - a_5 \cdot g_4 \qquad\qquad (3-21t)$$

$$q_{46_k} = q_{46_{k-1}} - a_6 \cdot g_4 \qquad (3\text{-}21u)$$

$$q_{47_k} = q_{47_{k-1}} - a_7 \cdot g_4 \qquad (3\text{-}21v)$$

$$q_{55_k} = q_{55_{k-1}} - a_5 \cdot g_5 + \sigma_p^2 \qquad (3\text{-}21w)$$

$$q_{56_k} = q_{56_{k-1}} - a_6 \cdot g_5 \qquad (3\text{-}21x)$$

$$q_{57_k} = q_{57_{k-1}} - a_7 \cdot g_5 \qquad (3\text{-}21y)$$

$$q_{66_k} = q_{66_{k-1}} - a_6 \cdot g_6 + \sigma_p^2 \qquad (3\text{-}21z)$$

$$q_{67_k} = q_{67_{k-1}} - a_7 \cdot g_6 \qquad (3\text{-}21\alpha)$$

$$q_{77_k} = q_{77_{k-1}} - a_7 \cdot g_7 + \sigma_p^2 \qquad (3\text{-}21\beta)$$

Die Werte $q_{11}$, $q_{22}$, ..., $q_{77}$ sind ein Maß für die Genauigkeit (Bestimmtheit) der Koeffizienten $A'_x$, $B'_x$, ..., $G'_x$ bzw. $A'_y$, $B'_y$, ..., $G'_y$ bzw. $A'_z$, $B'_z$, ..., $G'_z$ und können als Kriterium zum Abbruch der rekursiven Berechnung benutzt werden, z.B. wenn

$$q_{11} + q_{22} + q_{33} + q_{44} + q_{55} + q_{66} + q_{77} < 10\sigma_p^2 \qquad (3\text{-}22)$$

wird. Die Abbruchbedingung läßt sich weiter verschärfen (bzw. festlegen), wenn bestimmte Winkelbereiche, z.B.

$$\psi : \quad 0° \; \ldots \; 360°$$
$$\Phi : \; -30° \; \ldots \; +30°$$
$$\Theta : \; -30° \; \ldots \; +30°$$

erfaßt wurden, wodurch indirekt bestimmte Flugmanöver zur Kalibration vorgeschrieben werden.

Die ursprünglichen Koeffizienten $A_x$, $B_x$, ..., $G_x$, $A_y$, $B_y$, ..., $G_y$, $A'_z$, $B'_z$, ..., $G_z$ ergeben sich durch Umkehrung von (3-9) (= Multiplikation mit $T_0$), hier nur exemplarisch für $A_x$ angegeben.

$$A_x = A'_x \cdot T_0 \qquad (3\text{-}23)$$

Diese Koeffizienten dienen bei einem späteren Einsatz des Magnetometers dazu, aus den rohen Meßwerten $T'_x$, $T'_y$ und $T'_z$ die korrigierten Werte $T^c_x$, $T^c_y$ und $T^c_z$ zu berechnen:

$$T_x^c = T_x' + V_x \qquad (3-24a)$$

$$T_y^c = T_y' + V_y \qquad (3-24b)$$

$$T_z^c = T_z' + V_z \qquad (3-24c)$$

mit

$$V_x = -A_x - B_x \cdot \sin\psi - C_x \cdot \cos\psi - \qquad (3-25a)$$

$$D_x \cdot \Phi - E_x \cdot \Theta^2 - F_x \cdot \Theta - G_x \cdot \Theta^2$$

$$V_y = -A_y - B_y \cdot \sin\psi - C_y \cdot \cos\psi - \qquad (3-25b)$$

$$D_y \cdot \Phi - E_y \cdot \Theta^2 - F_y \cdot \Theta - G_y \cdot \Theta^2$$

$$V_z = -A_z - B_z \cdot \sin\psi - C_z \cdot \cos\psi - \qquad (3-25c)$$

$$D_z \cdot \Phi - E_z \cdot \Theta^2 - F_z \cdot \Theta - G_z \cdot \Theta^2$$

Der korrigierte Kurswinkel $\psi_m^c$, bezogen auf magnetisch Nord, berechnet sich dann nach (2-1, 2, 3), wobei die korrigierten Intensitäten $T_x^c$, $T_y^c$, $T_z^c$ einzusetzen sind. Für die Berechnung der Verbesserungen $V_x$, $V_y$, $V_z$ wird bereits der Kurswinkel $\psi$ benötigt. Ohne Genauigkeitseinbuße kann dieser Winkel zunächst aus den unkorrigierten Werten $T_x'$, $T_y'$ und $T_z'$ berechnet werden. Bei zu großen Differenzen (>5°) ist es von Vorteil, die Berechnung der Verbesserungen zweimal durchzuführen.

Eine nach (3-24, 25) durchgeführte Korrektur ist nur sinnvoll für die Kurs- und Lagewinkelbereiche, die auch während des Kalibrationsfluges erfaßt wurden. Nach Möglichkeit sollten, falls gemäß Patentanspruch 3 mindestens drei Referenzpunkte angeflogen werden, die Kreisstellen, an denen die für die Kalibration notwendigen Differenzen zum Sollwert ($\ell_x$, $\ell_y$, $\ell_z$; vgl. (3-8)) ermittelt wurden, möglichst gleichabständig sein (d.h. Vermeidung einer Ansammlung von Meßwerten an einer Kreisstelle). Der Algorithmus setzt außerdem gleichgenaue Differenzen $\ell_x$, $\ell_y$, $\ell_z$ voraus. Die für die automatische Kalibration notwendigen Sollwerte (Referenzrichtungen) ergeben sich aus einer Anfangsreferenzrichtung (z.B. durch Gyrocompassing), die bei dem anschließenden Kalibrationsflug durch kurzzeitig stabile Kreisel fortgeschrieben wird. Eine konstante Kreiseldrift kann durch eine Erweiterung des Kalibrationsmodells zusätzlich erfaßt werden, wenn diese die Genauigkeit der Kalibration stören sollte. Hingegen sind g-abhängige Kreiseldriften nur schwer erfaß- und korrigierbar.

Bei Verwendung einer auf geographisch Nord bezogenen Referenzrichtung muß die Ortsmißweisung (Deklination) berücksichtigt werden. Eine genaue Kalibration setzt außerdem, wie in den Patentansprüchen 1 und 2 angegeben, ein homogenes Magnetfeld, dessen Intensität und Inklination bekannt sind, voraus. Der Kalibrationsort sollte nicht in der Nähe lokaler Störfelder (Anomalien) liegen und während der Kalibration nicht verlassen werden. Diese Nebenbedingungen für eine automatische Kalibration (im Fluge) lassen sich sehr einfach etwa mit einem Hubschrauber erfüllen. Ein geeignetes Flugmanöver, das sämtliche für eine Kalibration notwendigen Kurs- und Lagewinkelbereiche überstreicht, ist z.B. eine horizontale Acht, wobei Roll- und Nickwinkelbereiche, die bei einem späteren Einsatz möglich sind, erflogen werden sollten. Die bei dieser Kalibration maximal bzw. minimal erreichten Roll- und Nickwinkel sind die Grenzwerte für den Gültigkeitsbereich der Korrekturfunktion (3-24, 25). Anhand dieser Grenzwerte sind die Cut-Off-Bedingungen für die Gültigkeit der Magnetometerdaten festzulegen. Testrechnungen auf der Grundlage des Verfahrens zeigen, daß für ein Magnetfeld mit der Intensität T = 32 A/m und I = 60° eine derartige Kalibration folgende Fehler kompensiert (Kursgenauigkeit nach Kompensation: besser 0,2°; zulässige Lagewinkel: ±30°).

Störfelder: 1 A/m
Skalenfaktorfehler: 3%
Bias: 1 A/m
Achsausrichtung: 0,1°.

Als Flugfigur wurde hierzu eine "liegende Acht" mit Roll- und Nickwinkel im Bereich ±30° simuliert.

Ist eine Anfangsreferenzrichtung indes nicht bekannt (z.B., wenn wegen der Kreiseldrift kein genaues Gyrocompassing möglich ist), so wird, wie im Patentanspruch 2 angegeben, zunächst eine fehlerfreie Anfangsrichtung (1. Kurswert $\psi_m$ nach (2-3)) unterstellt. Dann werden, wie zuvor beschrieben, die Abweichungen (Beobachtungen) $\ell_x$, $\ell_y$, $\ell_z$ (siehe (3-8)) berechnet. Eine fehlerhafte Anfangsausrichtung wirkt sich in diesem Fall als konstanter Kursfehler aus. Ein solcher Fehler erzeugt später beim Navigationsflug mit dem Navigationssystem eine Querablage $\Delta q$, die zur Berechnung einer Kurskorrektur $V_A$ ($\triangleq$ Fehler der Anfangsrichtung) benutzt werden kann. Die Querablage $\Delta q$ wird aus den Sollkoordinaten ($\rho$, $\lambda$) sowie aus den erflogenen Istkoordinaten ($\rho'$, $\lambda'$) zweier Referenzpunkte (Flugrichtung von $P_1$ nach $P_2$) wie folgt berechnet:

$$\Delta X = (\rho_2 - \rho_1) \cdot R_M \qquad (3-26a)$$

$$\Delta Y = (\lambda_2 - \lambda_1) \cdot R_N \qquad (3-26b)$$

$$\Delta X' = (\rho_2' - \rho_1') \cdot R_M \qquad (3-26c)$$

$$\Delta Y' = (\lambda_2' - \lambda_1') \cdot R_N \qquad (3-26d)$$

$\rho_i$, $\rho_i'$: geographische Breite (Soll, Ist)
$\lambda_i$, $\lambda_i'$: geographische Länge (Soll, Ist)
mit

$$R_M = \frac{a(1-e^2)}{(1-e^2 \sin^2 \bar{\rho})^{3/2}} \qquad (3-27)$$

$$R_N = \frac{a \cdot \cos \bar{\rho}}{\sqrt{1-e^2 \sin^2 \bar{\rho}}} \qquad (3-28)$$

$$\bar{\rho} = \frac{1}{2}(\rho_1 + \rho_2) \qquad (3-29)$$

a, e: Ellipsoidparameter (große Halbachse a, 1. Exzentrizität e)
$R_M$, $R_N$: Krümmungsradien des Ellipsoids
$\Delta q = -\Delta N \cdot \sin\psi + \Delta E \cdot \cos\psi$ (3-30)
mit
$\Delta N = \Delta X - \Delta X'$ (3-31a)
$\Delta E = \Delta Y - \Delta Y'$ (3-31b)
$\psi = \arctan \frac{\Delta Y}{\Delta X}$ (3-32)
$\psi$: Kurswinkel

Aus der Querablage sowie der zurückgelegten Strecke S,

$$S = \sqrt{\Delta X^2 + \Delta Y^2} \qquad (3-33)$$

berechnet sich schließlich die Kursverbesserung $V_A$:

$$V_A = \arctan \frac{\Delta q}{S} \qquad (3-34)$$

Die Genauigkeit aufgrund dieses zusätzlichen Verfahrensschritts wächst mit der Entfernung der Referenzpunkte (Mindestentfernung z.B. 5...10 km) und läßt sich durch Verwendung mehrerer Referenzpunkte $P_1$, $P_2$, $P_3$,... (z.B. Dreiecksflug) weiter steigern. Als Referenz eignen sich neben signalisierten Punkten, deren Koordinaten bekannt sind, auch markante Geländepunkte (z.B. Straßenkreuzungen), deren Koordinaten aus einer großmaßstäbigen Karte (>1:50 000) entnommen werden. In Verbindung mit einem Map-Display können die automatisch auf Knopfdruck ermittelten Koordinatendifferenzen direkt in den Kalibrationsprozeß eingegeben werden.

Anschließend werden die einzeln ermittelten Kursverbesserungen $V_{Ai}$ wie folgt zur endgültigen Verbesserung $\overline{V}_A$ zusammengefaßt:

$$\overline{V}_A = \frac{\Sigma p_i \cdot V_{Ai}}{\Sigma p_i} \qquad (3\text{-}35)$$

mit
$p_i = S_i$ (3-36)

Die einzelnen Kursverbesserungen erhalten dabei individuelle Gewichte $p_i$, die von der Entfernung der zur Berechnung der Kursverbesserung benutzten Referenzpunkte abhängen.

Die Verbesserung ist beim Einsatz des Magnetometers für die Kursstützung zusätzlich zu berücksichtigen:

$$\psi_m^C = f(T_x^C, \ T_y^C, \ T_z^C) + \overline{V}_A \qquad (3\text{-}37)$$

$T_x^C$, $T_y^C$, $T_z^C$: nach (3-25) korrigierte Intensitäten
$f()$: vgl. (2-1, 2, 3)
$\psi_m^C$: korrigierter Kurswinkel

Durch die zusätzliche Korrektur kann nicht nur der konstante Einbau- bzw. Kalibrationsfehler eines Flux Valve, sondern gleichzeitig ein Installationsfehler, beispielsweise eines Dopplergeschwindigkeitssensors, eliminiert werden. Ebenso bleiben lokale oder zeitlich variable Anomalien des Erdmagnetfeldes am Kalibrationsort ohne Auswirkung auf die spätere Kursgenauigkeit. Der wahre Wert der Ortsmißweisung (Deklination) wird nicht benötigt, da ein fehlerhafter Wert der Ortsmißweisung ebenso wie eine fehlerhafte "Nordorientierung" des zugrunde gelegten Referenzkoordinatensystems (Navigationskoordinatensystem) mit diesem Kalibrationsverfahren kompensiert wird.

Wird das erfindungsgemäße Verfahren weiterhin in zeitlichen Abständen wiederholt, so werden auch die langfristigen (jährlichen) Änderungen des Erdmagnetfeldes erfaßt, so daß es nicht mehr notwendig ist, dieses z.B. durch jährliches Aktualisieren bzw. durch Neuberechnung des Variationsmodells des Erdmagnetfeldes zu berücksichtigen. Durch die Verwendung mehrerer Referenzpunkte, die nach Möglichkeit weit voneinander entfernt liegen sollten (30...100 km), läßt sich die Genauigkeit der Kalibration nicht nur steigern, sondern es werden außerdem lokale Anomalien im Erdmagnetfeld weitestgehend eliminiert.

Das Kalibrationsverfahren gemäß der Erfindung sollte bei jeder Veränderung der magnetischen Eigenschaften des Fluggeräts (z.B. Austausch oder zusätzlicher Einbau von eisenhaltigen, magnetischen Materialien) sowie beim Austausch des Magnetometers und/oder eines Dopplergeschwindigkeitssensors neu erfolgen. Veränderungen dieser Art verursachen nicht nur Veränderungen der zyklischen Fehler, sondern auch eine Veränderung des konstanten Fehlerterms. Wird der Kalibrationsflug zur Erfassung des konstanten Fehlerterms in zeitlichen Abständen (z.B. jährlich) wiederholt, so wird automatisch die zeitliche Veränderung des Erdmagnetfeldes (magnetische Variation; ~0,15°/Jahr) berücksichtigt, da diese Veränderungen für ein großes Gebiet nahezu konstant sind und das Erdmagnetfeld sich relativ nur unwesentlich verändert.

Gegenüber dem aus der oben erwähnten Druckschrift GB-A 2 128 749 Bekannten, bei dem für alle drei Magnetometersignale ein gekoppeltes Gleichungssystem mit neun Unbekannten angesetzt wird, verwendet das erfindungsgemäße Verfahren für jedes Meßsignal getrennt eine Kalibrationsfunktion mit jeweils sieben Koeffizienten, durch die sowohl die Störungen durch die im Fahrzeug vorhandenen magnetischen Materialien als auch Instrumentenfehler (Skalenfaktorfehler, Additionskonstantenfehler, Achsausrichtfehler) und Einbaufehler im Fahrzeug erfaßt werden. Durch die Wahl der gleichartigen Kalibrationsfunktionen für die drei Signale muß nur einmal ein Gleichungssystem mit sieben Unbekannten gelöst werden – wobei sich die unterschiedlichen Koeffizienten infolge der unterschiedlichen Absolutglieder, die das Gleichungssystem nicht verändern, ergeben. Der Aufwand zur Berechnung von insgesamt 21 Koeffizienten ist somit geringer als der zur Bestimmung der neun Koeffizienten beim Verfahren gemäß GB-A 2 128 749. Durch die rekursive (iterative) Berechnung der Koeffizienten werden außerdem Singularitäten im Gleichungssystem von vornherein ausgeschlossen und zudem approximieren die Koeffizienten nur den Bereich, in dem sich das Fahrzeug während der Kalibration bewegt hat, wodurch dieser Bereich weitaus genauer approximiert werden kann als ein fiktiver, im Einsatz nicht erreichbarer "Rundumbereich".

**Patentansprüche**

1. Verfahren zur Kurswinkelbestimmung mittels eines in einem Luftfahrzeug fest montierten, aufgrund von magnetischen Störfeldern im Fahrzeug und instrumentell bedingten Fehlern zu kalibrierenden Dreiachsen-Magnetometers, bei dem zur automatischen Kalibration der Kursgenauigkeit während eines Kalibrationsflugmanövers laufend Abweichungen $\Delta T_x = T'_x - T_x$, $\Delta T_y = T'_y - T_y$, $\Delta T_z = T'_z - T_z$ der momentanen Magnetfeldkomponenten $T'_x$, $T'_y$, $T'_z$ von Referenzkomponenten $T_x$, $T_y$, $T_z$ des Erdmagnetfelds durch Beobachtung erfaßt und in eine Recheneinheit eingelesen werden, gekennzeichnet durch folgende Verfahrensschritte:

– es werden unter Verwendung einer genauen, mittels eines kurzzeitstabilen Kreisels oder mehrerer kurzzeitstabiler Kreisel bestimmten Anfangsreferenzrichtung an einem hinsichtlich seiner geographischen Koordinaten $(\rho, \lambda)$ genau bekannten Kalibrationsort, an dem ein von Anomalien freies, homogenes Erdmagnetfeld herrscht, dessen Intensität und Inklination bekannt sind, die für die Kalibration notwendigen Sollwerte der rechtwinklig zueinander stehenden Komponenten $T_x$, $T_y$, $T_z$ des Erdmagnetfelds festgelegt;

– bei dem Kalibrationsflugmanöver werden sämtliche für die Kalibration notwendigen Kurs- und Lagewinkelbereiche überstrichen, wobei innerhalb von festgelegten Grenzwerten die für praktische Einsätze erforderlichen Roll- und Nickwinkelbereiche erflogen werden;

– in der Recheneinheit werden sukzessive nach Anfall jedes neuen Beobachtungstripels $\Delta T_x$, $\Delta T_y$, $\Delta T_z$ rekursiv entsprechend den Kalibrationsfunktionen

$$\Delta T_x = T'_x - T_x = A_x + B_x \cdot \sin\psi + C_x \cdot \cos\psi +$$
$$D_x \cdot \Phi + E_x \cdot \Phi^2 + F_x \cdot \Theta + G_x \cdot \Theta^2 \qquad (1a)$$

$$\Delta T_y = T'_y - T_y = A_y + B_y \cdot \sin\psi + C_y \cdot \cos\psi +$$
$$D_y \cdot \Phi + E_y \cdot \Phi^2 + F_y \cdot \Theta + G_y \cdot \Theta^2 \qquad (1b)$$

$$\Delta T_z = T'_z - T_z = A_z + B_z \cdot \sin\psi + C_z \cdot \cos\psi +$$
$$D_z \cdot \Phi + E_z \cdot \Phi^2 + F_z \cdot \Theta + G_z \cdot \Theta^2 \qquad (1c)$$

wobei mit $\psi$ der Kurswinkel, mit $\Phi$ der Rollwinkel und mit $\Theta$ der Nickwinkel bezeichnet ist, Korrekturkoeffizienten
$A_x$, $B_x$,...$G_x$
$A_y$, $B_y$,...$G_y$
$A_z$, $B_z$,...$G_z$
unter Berücksichtigung der Anfangsbedingungen
$A_x$, $B_x$,...$G_x = 0$
$A_y$, $B_y$,...$G_y = 0$
$A_z$, $B_z$,...$G_z = 0$
bis zu einer vorgebbaren Genauigkeit errechnet;
– unter Benutzung der Korrekturkoeffizienten $A_x$, $B_x$,...$G_z$, werden die momentanen Magnetfeldkomponenten zu korrigierten Intensitätskomponenten

$$T^C_x = T'_x + V_x \qquad (2a)$$

$$T^C_y = T'_y + V_y \qquad (2b)$$

$$T^C_z = T'_z + V_z \qquad (2c)$$

mit den Verbesserungswerten

$$V_x = -A_x - B_x \cdot \sin\psi - C_x \cdot \cos\psi -$$
$$D_x \cdot \Phi - E_x \cdot \Phi^2 - F_x \cdot \Theta - G_x \cdot \Theta^2 \qquad (3a)$$

$$V_y = -A_y - B_y \cdot \sin\psi - C_y \cdot \cos\psi -$$
$$D_y \cdot \Phi - E_y \cdot \Phi^2 - F_y \cdot \Theta - G_y \cdot \Theta^2 \qquad (3b)$$

$$V_z = -A_z - B_z \cdot \sin\psi - C_z \cdot \cos\psi -$$
$$D_z \cdot \Phi - E_z \cdot \Phi^2 - F_z \cdot \Theta - G_z \cdot \Theta^2 \qquad (3c)$$

umgesetzt und daraus der korrigierte Kurswinkel $\psi_m^c$ bestimmt, wobei in den Gleichungen (3a), (3b) und (3c) für den Kurswinkel $\psi$ der unkorrigierte Wert eingesetzt wird.

2. Verfahren zur Kurswinkelbestimmung mittels eines in einem Luftfahrzeug fest montierten, aufgrund von magnetischen Störfeldern im Fahrzeug und instrumentell bedingten Fehlern zu kalibrierenden Dreiachsen-Magnetometers, bei dem zur automatischen Kalibration der Kursgenauigkeit während eines Kalibrationsflugmanövers laufend Abweichungen $\Delta T_x = T'_x - T_x$, $\Delta T_y = T'_y - T_y$, $\Delta T_z = T'_z - T_z$ der momentanen Magnetfeldkomponenten $T'_x$, $T'_y$, $T'_z$ von Referenzkomponenten $T_x$, $T_y$, $T_z$ des Erdmagnetfelds durch Beobachtung erfaßt und in eine Recheneinheit eingelesen werden, gekennzeichnet durch folgende Verfahrensschritte:

– durch Schätzung wird an einem hinsichtlich seiner geographischen Koordinaten ($\rho$, $\lambda$) bekannten Kalibrationsort, an dem ein von Anomalien freies, homogenes Erdmagnetfeld herrscht, dessen Intensität und Inklination bekannt sind, eine als fehlerfrei unterstellte Anfangsreferenzrichtung festgelegt, die unter Verwendung eines kurzzeitstabilen Kreisels zur Bestimmung der für die Kalibration notwendigen Sollwerte der rechtwinklig zueinander stehenden Komponenten $T_x$, $T_y$, $T_z$ des Erdmagnetfelds dient;

– bei dem Kalibrationsflugmanöver werden für die Kalibration notwendige Kurs- und Lagewinkelbereiche überstrichen, wobei innerhalb von festgelegten Grenzwerten die für praktische Einsätze erforderlichen Roll- und Nickwinkelbereiche erflogen werden;

– in der Recheneinheit werden sukzessive nach Anfall jedes neuen Beobachtungstripels $\Delta T_x$, $\Delta T_y$, $\Delta T_z$ rekursiv entsprechend den Kalibrationsfunktionen

$$T_x = T'_x - T_x = A_x + B_x \cdot \sin\psi + C_x \cdot \cos\psi +$$
$$D_x \cdot \Phi + E_x \cdot \Phi^2 + F_x \cdot \Theta + G_x \cdot \Theta^2 \qquad (1a)$$

$$T_y = T'_y - T_y = A_y + B_y \cdot \sin\psi + C_y \cdot \cos\psi +$$
$$D_y \cdot \Phi + E_y \cdot \Phi^2 + F_y \cdot \Theta + G_y \cdot \Theta^2 \qquad (1b)$$

$$T_z = T'_z - T_z = A_z + B_z \cdot \sin\psi + C_z \cdot \cos\psi +$$
$$D_z \cdot \Phi + E_z \cdot \Phi^2 + F_z \cdot \Theta + G_z \cdot \Theta^2 \qquad (1c)$$

wobei mit $\psi$ der Kurswinkel, mit $\Phi$ der Rollwinkel und mit $\Theta$ der Nickwinkel bezeichnet ist,
Korrekturkoeffizienten
$A_x$, $B_x$,...$G_x$
$A_y$, $B_y$,...$G_y$
$A_z$, $B_z$,...$G_z$
unter Berücksichtigung der Anfangsbedingungen
$A_x$, $B_x$,...$G_x = 0$
$A_y$, $B_y$,...$G_y = 0$
$A_z$, $B_z$,...$G_z = 0$

bis zu einer vorgebbaren Genauigkeit errechnet;
– unter Benutzung der Korrekturkoeffizienten $A_x$, $B_x$,...$G_z$, werden die momentanen Magnetfeldkomponenten zu korrigierten Intensitätskomponenten

$$T_x^C = T_x' + V_x \qquad (2a)$$

$$T_y^C = T_y' + V_y \qquad (2b)$$

$$T_z^C = T_z' + V_z \qquad (2c)$$

mit den Verbesserungswerten

$$V_x = -A_x - B_x \cdot \sin\psi - C_x \cdot \cos\psi -$$
$$D_x \cdot \Phi - E_x \cdot \Phi^2 - F_x \cdot \Theta - G_x \cdot \Theta^2 \qquad (3a)$$

$$V_y = -A_y - B_y \cdot \sin\psi - C_y \cdot \cos\psi -$$
$$D_y \cdot \Phi - E_y \cdot \Phi^2 - F_y \cdot \Theta - G_y \cdot \Theta^2 \qquad (3b)$$

$$V_z = -A_z - B_z \cdot \sin\psi - C_z \cdot \cos\psi -$$
$$D_z \cdot \Phi - E_z \cdot \Phi^2 - F_z \cdot \Theta - G_z \cdot \Theta^2 \qquad (3c)$$

umgesetzt und daraus der korrigierte Kurswinkel $\psi_m^C$ bestimmt, wobei in den Gleichungen (3a), (3b) und (3c) für den Kurswinkel $\psi$ der unkorrigierte Wert eingesetzt wird;
– zur Berücksichtigung eines sich aus einer fehlerhaften Anfangsreferenzrichtung ergebenden konstanten Kursfehlers, der eine Querablage $\Delta q$ hervorruft, wird durch einen weiteren Kalibrationsflug zwischen wenigstens zwei hinsichtlich ihrer Koordinaten ($\rho_1$, $\rho_2$; $\lambda_1$, $\lambda_2$) genau bekannten Reverenzpunkten ($P_1$, $P_2$) eine dem Fehler der Anfangsreferenzrichtung entsprechende Kurskorrektur

$$V_A = \arctan \frac{\Delta q}{S} \qquad (4a)$$

bestimmt, wobei gilt:

$$\Delta q = (\Delta X' - \Delta X)\sin(\arctan \frac{\Delta Y}{\Delta X}) + (\Delta Y - \Delta Y')\cos (\arctan \frac{\Delta Y}{\Delta X}) \qquad (4b)$$

mit
– $(\Delta X - \Delta X')$ = Streckenabweichung in geographischer Breitenrichtung bei Flug zwischen den Referenzpunkten ($P_1$, $P_2$),
– $(\Delta Y - \Delta Y')$ = Streckenabweichung in geographischer Längenrichtung bei Flug zwischen den Referenzpunkten ($P_1$, $P_2$),
– $\arctan \frac{\Delta Y}{\Delta X}$ = Kurswinkel und

– S = zurückgelegte Strecke zwischen den Referenzpunkten (P₁, P₂); und
– Bestimmung des korrigierten Kurswinkels gemäß

$$\psi_m^C = f(T_x^C, \; T_y^C, \; T_z^C) + V_A. \tag{5b}$$

3. Verfahren nach Anspruch 2, dadurch gekennzeichnet, daß zur Verbesserung der Genauigkeit bei der Bestimmung des korrigierten Kurswinkels mindestens drei Referenzpunkte (P₁, P₂, P₃, ...) angeflogen werden und die Kurskorrektur entsprechend der Beziehung

$$\overline{V}_A = \frac{\Sigma p_i \cdot V_{Ai}}{\Sigma p_i}$$

bestimmt wird mit
– $p_i$ = Gewichte zur Berücksichtigung der individuellen Genauigkeit eines Einzelwerts $V_{Ai}$ , bezogen auf Teilstrecken $S_i$ ≙ $S_{12}$, $S_{23}$, $S_{34}$, ... zwischen den Referenzpunkten P₁, P₂, P₃, P₄, ... und
– $V_{Ai}$ = Kurskorrekturwert einer jeweiligen Teilstrecke $S_{12}$, $S_{23}$, $S_{34}$.
4. Verfahren nach Anspruch 2, dadurch gekennzeichnet, daß die Bestimmung der Kurskorrektur $V_A$ mittels zweier oder mehrerer Referenzpunkte zusätzlich zur Kalibration des Einbaufehlers des Geschwindigkeitssensors bzw. der inertialen Beschleunigungsmeßanlage sowie zur Erfassung der Ortsmißweisung verwendet wird.
5. Verfahren nach Anspruch 3, dadurch gekennzeichnet, daß die drei Referenzpunkte (P₁, P₂, P₃) als Eckpunkte eines Dreiecks gewählt werden und daß als Kalibrationsflug ein die Referenzpunkte überfliegender Dreiecksflug im Uhr- und im Gegenuhrzeigersinn durchgeführt wird.

**Revendications**

1. Procédé pour la détermination du cap magnétique au moyen d'un magnétomètre à trois axes monté à demeure dans un aéronef et devant être étalonné en raison de champs de perturbations magnétiques dans l'aéronef et d'erreurs instrumentales pour lequel, pour l'étalonnage automatique de la précision du cap, des écarts $\Delta T_x = T'_x - T_x$, $\Delta T_y = T'_y - T_y$, $\Delta T_z = T'_z - T_z$ des composantes de champ magnétique momentanées $T'_x$, $T'_y$, $T'_z$ par rapport aux composantes de référence $T_x$, $T_y$, $T_z$ du champ magnétique terrestre sont enregistrés en continu, par observation, au cours d'une manœuvre de vol d'étalonnage, et introduits dans une unité de calcul, caractérisé par les opérations suivantes:
– les valeurs théoriques des composantes $T_x$, $T_y$, $T_z$ du champ magnétique terrestre perpendiculaires les unes aux autres nécessaires pour l'étalonnage sont définies par l'utilisation d'une direction de référence initiale précise déterminée, au moyen d'un gyroscope à stabilité temporaire où de plusieurs gyroscopes à stabilité temporaire, en un lieu d'étalonnage bien connu en ce qui concerne ses coordonnées géographiques (ρ, λ) et caractérisé par un champ magnétique terrestre homogène et exempt d'anomalies dont l'intensité et l'inclinaison sont connues;
– lors de la manœuvre de vol d'étalonnage, toutes les plages d'angles de route et de position nécessaires pour l'étalonnage sont balayées, les plages d'angles de roulis et d'inclinaison longitudinale nécessaires pour des missions pratiques sont déterminées en vol à l'intérieur de valeurs limites définies;
– dans l'unité de calcul, on calcule successivement, après l'obtention de chaque nouveau triplet d'observation $\Delta T_x$, $\Delta T_y$, $\Delta T_z$ et de manière récurrente, conformément aux fonctions d'étalonnage.

$$\Delta T_x = T'_x - T_x = A_x + B_x \cdot \sin\psi + C_x \cdot \cos\psi +$$
$$D_x \cdot \Phi + E_x \cdot \Phi^2 + F_x \cdot \Theta + G_x \cdot \Theta^2 \tag{1a}$$

$$T_y = T'_y - T_y = A_y + B_y \cdot \sin\psi + C_y \cdot \cos\psi +$$
$$D_y \cdot \Phi + E_y \cdot \Phi^2 + F_y \cdot \Theta + G_y \cdot \Theta^2 \tag{1b}$$

$$T_z = T'_z - T_z = A_z + B_z \cdot \sin\psi + C_z \cdot \cos\psi +$$
$$D_z \cdot \Phi + E_z \cdot \Phi^2 + F_z \cdot \Theta + G_z \cdot \Theta^2 \tag{1c}$$

où $\psi$ désigne l'angle de route, $\Phi$ l'angle de roulis et $\Theta$ l'angle d'inclinaison longitudinale, des coefficients de correction

$A_x, B_x,...G_x$
$A_y, B_y,...G_y$
$A_z, B_z,...G_z$

dont la précision peut être prédéterminée, en tenant compte des conditions initiales

$A_x, B_x,...G_x = 0$
$A_y, B_y,...G_y = 0$
$A_z, B_z,...G_z = 0$

– en utilisant les coefficients de correction $A_x$, $B_x$,...$G_z$, les composantes de champ magnétique momentanées sont transformées en composantes d'intensité corrigées

$$T^c{}_x = T'_x + V_x \qquad\qquad (2a)$$

$$T^c{}_y = T'_y + V_y \qquad\qquad (2b)$$

$$T^c{}_z = T'_z + V_z \qquad\qquad (2c)$$

avec les valeurs de correction

$$V_x = -A_x - B_x \cdot \sin\psi - C_x \cdot \cos\psi -$$
$$D_x \cdot \Phi - E_x \cdot \Phi^2 - F_x \cdot \Theta - G_x \cdot \Theta^2 \qquad (3a)$$
$$V_y = -A_y - B_y \cdot \sin\psi - C_y \cdot \cos\psi -$$
$$D_y \cdot \Phi - E_y \cdot \Phi^2 - F_y \cdot \Theta - G_y \cdot \Theta^2 \qquad (3b)$$
$$V_z = -A_z - B_z \cdot \sin\psi - C_z \cdot \cos\psi -$$
$$D_z \cdot \Phi - E_z \cdot \Phi^2 - F_z \cdot \Theta - G_z \cdot \Theta^2 \qquad (3c)$$

d'où est déterminé l'angle de route corrigé $\psi_m^c$, la valeur non corrigée étant introduite dans les équations (3a), (3b) et (3c) pour l'angle de route $\psi$.

2. Procédé pour la détermination du cap magnétique au moyen d'un magnétomètre à trois axes monté à demeure dans un aéronef et devant être étalonné en raison de champs de perturbations magnétiques dans l'aéronef et d'erreurs instrumentales pour lequel, pour l'étalonnage automatique de la précision du cap, des écarts $\Delta T_x = T'_x - T_x$, $\Delta T_y = T'_y - T_y$, $\Delta T_z = T'_z - T_z$ des composantes de champ magnétique momentanées $T'_x$, $T'_y$, $T'_z$ par rapport aux composantes de référence $T_x$, $T_y$, $T_z$ du champ magnétique terrestre sont enregistrés en continu, par observation, au cours d'une manœuvre de vol d'étalonnage, et introduits dans une unité de calcul, caractérisé par les opérations suivantes:

– en un lieu d'étalonnage bien connu en ce qui concerne ses coordonnées géographiques ($\rho$, $\lambda$) et caractérisé par un champ magnétique terrestre homogène et exempt d'anomalies dont l'intensité et l'inclinaison sont connues, on détermine par évaluation une direction de référence initiale admise comme étant correcte laquelle sert à la détermination des valeurs théoriques des composantes $T_x$, $T_y$, $T_z$ du champ magnétique terrestre perpendiculaires les unes aux autres et nécessaires pour l'étalonnage, avec utilisation d'un gyroscope à stabilité temporaire;

– lors de la manœuvre de vol d'étalonnage, les plages d'angles de route et de postition nécessaires pour l'étalonnage sont balayées, les plages d'angles de roulis et d'inclinaison longitudinale nécessaires pour des missions pratiques sont déterminées en vol à l'intérieur de valeurs limites définies;

– dans l'unité de calcul, on calcule successivement, après l'obtention de chaque nouveau triplet d'observation $\Delta T_x$, $\Delta T_y$, $\Delta T_z$ et de manière récurrente, conformément aux fonctions d'étalonnage

$$T_x = T'_x - T_x = A_x + B_x \cdot \sin\psi + C_x \cdot \cos\psi +$$
$$D_x \cdot \Phi + E_x \cdot \Phi^2 + F_x \cdot \Theta + G_x \cdot \Theta^2 \qquad (1a)$$
$$T_y = T'_y - T_y = A_y + B_y \cdot \sin\psi + C_y \cdot \cos\psi +$$
$$D_y \cdot \Phi + E_y \cdot \Phi^2 + F_y \cdot \Theta + G_y \cdot \Theta^2 \qquad (1b)$$
$$T_z = T'_z - T_z = A_z + B_z \cdot \sin\psi + C_z \cdot \cos\psi +$$
$$D_z \cdot \Phi + E_z \cdot \Phi^2 + F_z \cdot \Theta + G_z \cdot \Theta^2 \qquad (1c)$$

où $\psi$ désigne l'angle de route, $\Phi$ l'angle de roulis et $\Theta$ l'angle d'inclinaison longitudinale, des coefficients de correction

$A_x, B_x,...G_x$

$A_y, B_y,...G_y$

$A_z, B_z,...G_z$

dont la précision peut être prédéterminée, en tenant compte des conditions initiales

$A_x, B_x,...G_x = 0$

$A_y, B_y,...G_y = 0$

$A_z, B_z,...G_z = 0$

– en utilisant les coefficients de correction $A_x, B_x,...G_z$, les composantes de champ magnétique momentanées sont transformées en composantes d'intensité corrigées

$$T^c_x = T'_x + V_x \qquad (2a)$$

$$T^c_y = T'_y + V_y \qquad (2b)$$

$$T^c_z = T'_z + V_z \qquad (2c)$$

avec les valeurs de correction

$$V_x = -A_x - B_x \cdot \sin\psi - C_x \cdot \cos\psi -$$
$$D_x \cdot \Phi - E_x \cdot \Phi^2 - F_x \cdot \Theta - G_x \cdot \Theta^2 \qquad (3a)$$

$$V_y = -A_y - B_y \cdot \sin\psi - C_y \cdot \cos\psi -$$
$$D_y \cdot \Phi - E_y \cdot \Phi^2 - F_y \cdot \Theta - G_y \cdot \Theta^2 \qquad (3b)$$

$$V_z = -A_z - B_z \cdot \sin\psi - C_z \cdot \cos\psi -$$
$$D_z \cdot \Phi - E_z \cdot \Phi^2 - F_z \cdot \Theta - G_z \cdot \Theta^2 \qquad (3c)$$

d'où est déterminé l'angle de route corrigé $\psi^c_m$, la valeur non corrigée étant introduite dans les équations (3a), (3b) et (3c) pour l'angle de route $\psi$.

– pour tenir compte d'une erreur de cap constante résultant d'une direction de référence initiale incorrecte et provoquant un écart transversal $\Delta q$, on détermine par un autre vol d'étalonnage entre au moins deux points de référence ($P_1$, $P_2$) dont les coordonnées ($\rho_1$, $\rho_2$; $\lambda_1$, $\lambda_2$) sont connues avec précision, une correction de cap correspondant à l'erreur de la direction de référence initiale

$$V_A = \arctan \frac{\Delta q}{S} \qquad (4a)$$

où :

$$\Delta q = (\Delta X' - \Delta X)\sin(\arctan \frac{\Delta Y}{\Delta X}) + (\Delta Y - \Delta Y')\cos \qquad (4b)$$

$$(\arctan \frac{\Delta Y}{\Delta X})$$

avec:

– ($\Delta X - \Delta X'$) = écart de distance dans le sens de la latitude pour un vol entre les points de référence ($P_1$, $P_2$),

– ($\Delta Y - \Delta Y'$) = écart de distance dans le sens de la longitude pour un vol entre les points de référence ($P_1$, $P_2$),

– $\arctan \frac{\Delta Y}{\Delta X}$ = angle de route et

– S = distance parcourue entre les points de référence ($P_1$, $P_2$); et

– détermination de l'angle de route corrigé suivant

$$\psi^c{}_m = f(T^c{}_x, \ T^c{}_y, \ T^c{}_z) + V_A. \tag{5b}$$

3. Procédé selon la revendication 2, caractérisé en ce que, pour améliorer la précision de la détermination de l'angle de route corrigé, on se dirige vers au moins trois points de référence ($P_1$, $P_2$, $P_3$, ...) et que la correction du cap est déterminée conformément à la relation

$$\overline{V}_A = \frac{\Sigma p_i \cdot V_{Ai}}{\Sigma p_i}$$

avec
– $p_i$ = Poids pour la prise en compte de la précision individuelle d'une valeur individuelle $V_{Ai}$, rapportés à des distances partielles $S_i \triangleq S_{12}, S_{23}, S_{34}$, ... entre les points de référence $P_1, P_2, P_3, P_4$, ... et
– $V_{Ai}$ = Valeur de correction de cap d'une distance partielle respective $S_{12}, S_{23}, S_{34}$.

4. Procédé selon la revendication 2, caractérisé en ce que la détermination de la correction de cap $V_A$ au moyen de deux ou plusieurs points de référence est utilisée, en plus, pour l'étalonnage de l'erreur de montage du capteur de vitesse et respectivement du système de mesure d'accélération inertiel ainsi que pour la détermination de la déclinaison magnétique locale.

5. Procédé selon la revendication 3, caractérisé en ce que les trois points de référence ($P_1$, $P_2$, $P_3$) sont choisis en tant que coins d'un triangle et qu'un vol triangulaire survolant les points de référence dans le sens horaire et dans le sens antihoraire est effectué comme vol d'étalonnage.

## Claims

1. Method for the determination of route angle by means of a three-axis magnetometer, which is fixedly mounted on an aircraft and which is to be calibrated on accont of interfering magnetic fields in the vehicle and errors caused by instrumentation, in which, for the automatic calibration of the course accuracy during a calibration flight manoeuvre, the deviations $\Delta T_x = T'_x - T_x, \Delta T_y = T'_y - T_y, \Delta T_z = T'_z - T_z$ of the instantaneous magnetic field components $T'_x, T'_y, T'_z$ from the reference components $T_x, T_y, T_z$ of the magnetic field of the earth are continuously determined by observation and read into a computer unit, characterized by the following method steps:
– with the application of an accurate initial reference direction determined by means of one or more gyros exhibiting short-term stability, at a calibration location which is accurately known with regard to its geographic coordinates (longitude, latitude), at which location a homogeneous magnetic field of the earth which is free from anomalies prevails, the intensity and inclination of which are known, the theoretical values, which are necessary for the calibration, of the mutually perpendicular components $T_x$, $T_y$, $T_z$ of the magnetic field of the earth are determined;
– a calibration flight manoeuvre is carried out, which sweeps over all route angle and course angle ranges required for a calibration, within established limiting values the roll and pitch angle ranges required for practical applications being flown;
– there are computed in the computer unit successively after the occurrence of each new observation triplet $\Delta T_x, \Delta T_y, \Delta T_z$ recurrently in accordance with the calibration functions

$$\Delta T_x = T'_x - T_x = A_x + B_x \cdot \sin\psi + C_x \cdot \cos\psi + $$
$$D_x \cdot \phi + E_x \cdot \phi^2 + F_x \cdot \theta + G_x \cdot \theta^2 \tag{1a}$$

$$\Delta T_y = T'_y - T_y = A_y + B_y \cdot \sin\psi + C_y \cdot \cos\psi + $$
$$D_y \cdot \phi + E_y \cdot \phi^2 + F_y \cdot \theta + G_y \cdot \theta^2 \tag{1b}$$

$$\Delta T_z = T'_z - T_z = A_z + B_z \cdot \sin\psi + C_z \cdot \cos\psi + $$
$$D_z \cdot \phi + E_z \cdot \phi^2 + F_z \cdot \theta + G_z \cdot \theta^2 \tag{1c}$$

where $\psi$ designates the route angle, $\phi$ designates the roll angle and $\theta$ designates the pitch angle, correction coefficients

$A_x, B_x,...G_x$
$A_y, B_y,...G_y$
$A_z, B_z,...G_z$
having regard to the initial conditions
$A_x, B_x,...G_x = 0$
$A_y, B_y,...G_y = 0$
$A_z, B_z,...G_z = 0$
up to a predeterminable accuracy;
− with the use of the correction coefficients $A_x$, $B_x$,...$G_z$, the instantaneous magnetic field components are transformed into corrected intensity components

$$T_x^c = T_x^i + V_x \qquad (2a)$$
$$T_y^c = T_y^i + V_y \qquad (2b)$$
$$T_z^c = T_z^i + V_z \qquad (2c)$$

with the correction values

$$V_x = -A_x - B_x \cdot \sin\psi - C_x \cdot \cos\psi - \qquad (3a)$$
$$D_x \cdot \Phi - E_x \cdot \Phi^2 - F_x \cdot \Theta - G_x \cdot \Theta^2$$
$$V_y = -A_y - B_y \cdot \sin\psi - C_y \cdot \cos\psi - \qquad (3b)$$
$$D_y \cdot \Phi - E_y \cdot \Phi^2 - F_y \cdot \Theta - G_y \cdot \Theta^2$$
$$V_z = -A_z - B_z \cdot \sin\psi - C_z \cdot \cos\psi - \qquad (3c)$$
$$D_z \cdot \Phi - E_z \cdot \Phi^2 - F_z \cdot \Theta - G_z \cdot \Theta^2$$

and the corrected route angle $\psi_m^c$ is determined therefrom, the uncorrected value for the route angle $\psi$ being inserted in equations (3a), (3b) and (3c).

2. Method for the determination of the route angle by means of a three-axis magnetometer, which is fixedly mounted in an aircraft and which is to be calibrated on account of interfering magnetic fields in the vehicle and errors caused by instrumentation, in which, for the automatic calibration of the course accuracy during a calibration flight manoeuvre, the deviations $\Delta T_x = T'_x - T_x$, $\Delta T_y = T'_y - T_y$, $\Delta T_z = T'_z - T_z$ of the instantaneous magnetic field components $T'_x$, $T'_y$, $T'_z$ from the reference components $T_x$, $T_y$, $T_z$ of the magnetic field of the earth are continuously determined by observation and read into a computer unit, characterized by the following method steps:

− an initial reference direction assumed to be free from error is established by estimation at a calibration location known with regard to its geographic coordinates $(\rho, \lambda)$, at which location a homogeneous magnetic field of the earth which is free from anomalies prevails, the intensity and inclination of which are known, which initial reference direction serves, with the application of a gyro exhibiting short-term stability, for the determination of the theoretical values, which are required for the calibration, of the mutually perpendicular components $T_x$, $T_y$, $T_z$ of the magnetic field of the earth;

− a calibration flight manoeuvre is carried out, which sweeps over all route angle and course angle ranges required for the calibration, within established limiting values the roll and pitch angle ranges required for practical applications being flown;

− there are computed in the computer unit successively after the occurrence of each new observation triplet $\Delta T_x$, $\Delta T_y$, $\Delta T_z$ recurrently in accordance with the calibration functions

$$T_x = T_x' - T_x = A_x + B_x \cdot \sin\psi + C_x \cdot \cos\psi + \qquad (1a)$$

$$D_x \cdot \Phi + E_x \cdot \Phi^2 + F_x \cdot \Theta + G_x \cdot \Theta^2$$

$$T_y = T_y' - T_y = A_y + B_y \cdot \sin\psi + C_y \cdot \cos\psi +$$

$$D_y \cdot \Phi + E_y \cdot \Phi^2 + F_y \cdot \Theta + G_y \cdot \Theta^2 \qquad (1b)$$

$$T_z = T_z' - T_z = A_z + B_z \cdot \sin\psi + C_z \cdot \cos\psi +$$

$$D_z \cdot \Phi + E_z \cdot \Phi^2 + F_z \cdot \Theta + G_z \cdot \Theta^2 \qquad (1c)$$

where $\psi$ designates the route angle, $\Phi$ designates the roll angle and $\Theta$ designates the pitch angle, correction coefficients

$A_x, B_x, ... G_x$

$A_y, B_y, ... G_y$

$A_z, B_z, ... G_z$

having regard to the initial conditions

$A_x, B_x, ... G_x = 0$

$A_y, B_y, ... G_y = 0$

$A_z, B_z, ... G_z = 0$

up to a predeterminable accuracy;

– with the use of the correction coefficients $A_x$, $B_x$, ... $G_z$, the instantaneous magnetic field components are transformed into corrected intensity components

$$T_x^C = T_x' + V_x \qquad (2a)$$

$$T_y^C = T_y' + V_y \qquad (2b)$$

$$T_z^C = T_z' + V_z \qquad (2c)$$

with the correction values

$$V_x = -A_x - B_x \cdot \sin\psi - C_x \cdot \cos\psi -$$

$$D_x \cdot \Phi - E_x \cdot \Phi^2 - F_x \cdot \Theta - G_x \cdot \Theta^2 \qquad (3a)$$

$$V_y = -A_y - B_y \cdot \sin\psi - C_y \cdot \cos\psi -$$

$$D_y \cdot \Phi - E_y \cdot \Phi^2 - F_y \cdot \Theta - G_y \cdot \Theta^2 \qquad (3b)$$

$$V_z = -A_z - B_z \cdot \sin\psi - C_z \cdot \cos\psi -$$

$$D_z \cdot \Phi - E_z \cdot \Phi^2 - F_z \cdot \Theta - G_z \cdot \Theta^2 \qquad (3c)$$

and the corrected route angle $\psi_m^c$ is determined therefrom, the uncorrected value for the route angle $\psi$ being inserted in equations (3a), (3b) and (3c);
— in order to take account of a constant course error, which arises from an erroneous initial reference direction and which causes a transverse deviation $\Delta q$, by means of a further calibration flight between at least two reference points ($P_1$, $P_2$) which are accurately known with regard to their coordinates ($\rho_1$, $\rho_2$; $\lambda_1$, $\lambda_2$), a course correction

$$V_A = \arctan \frac{\Delta q}{S} \qquad (4a)$$

corrresponding to the error of the initial reference direction is determined, where the following expressions are applicable:

$$\Delta q = (\Delta X' - \Delta X)\sin(\arctan \frac{\Delta Y}{\Delta X}) + (\Delta Y - \Delta Y')\cos$$

$$(\arctan \frac{\Delta Y}{\Delta X}) \qquad (4b)$$

where
— ($\Delta X - \Delta X'$) = path difference in the latitudinal direction in flight between the reference points ($P_1$, $P_2$),
— ($\Delta Y - \Delta Y'$) = path difference in the longitudinal direction in flight between the reference points ($P_1$, $P_2$),
— $\arctan \frac{\Delta Y}{\Delta X}$ = route angle, and
— $S$ = path traversed between the reference points ($P_1$, $P_2$); and
— determination of the corrected route angle according to

$$\psi_m^c = f(T_x^c, T_y^c, T_z^c) + V_A. \qquad (5b)$$

3. Method according to Claim 2, characterized in that, in order to improve the accuracy in the determination of the corrected route angle, at least three reference points ($P_1$, $P_2$, $P_3$, ...) are flown, and the course correction is determined in accordance with the relation:

$$\overline{V}_A = \frac{\Sigma p_i \cdot V_{A_i}}{\Sigma p_i}$$

where
- $p_i$ = weightings to take account of the individual accuracy of an individual value $V_{A_i}$ based on stages $S_i \triangleq S_{12}, S_{23}, S_{34}, ...$ between the reference points $P_1, P_2, P_3, P_4, ...$ and
- $V_{A_i}$ = course correction value of a respective stage $S_{12}, S_{23}, S_{34}$.

4. Method according to Claim 2, characterized in that the determination of the course correction $V_A$ by means of two or more reference points is employed in addition to the calibration of the mounting error of the velocity sensor of the inertial accelerometer as well as to the determination of the local magnetic variation.

5. Method according to Claim 3, characterized in that the three reference points ($P_1$, $P_2$, $P_3$) are chosen as vertices of a triangle, and that a triangular flight flying over the reference points in the clockwise and in the anti-clockwise direction is carried out as calibration flight.